(19) **Europäisches Patentamt / European Patent Office / Office européen des brevets**

(11) **EP 2 348 088 A1**

(12) **EUROPEAN PATENT APPLICATION**

(43) Date of publication:
27.07.2011 Bulletin 2011/30

(51) Int Cl.:
*C09K 5/16* (2006.01)  *F01P 9/00* (2006.01)

(21) Application number: 10464002.4

(22) Date of filing: 22.01.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicant: **Continental Automotive GmbH**
**30165 Hannover (DE)**

(72) Inventor: **Paulus, Theodor**
**700590 Iasi (RO)**

(54) **Cooling circuit and method for cooling a heat generating device**

(57)    Cooling circuit and method for cooling a heat generating device

The invention relates to a cooling circuit (16) for cooling a heat generating device (12) of a vehicle, the circuit (16) comprising:
- a heat sink means (14) for contacting the heat generating device (12), a cooling unit (18) and a conduit system (22) for recirculation of a cooling fluid between the heat sink means (14) and the cooling unit (18), wherein a first temperature (T1) of the heat sink means (14) is higher than a second temperature (T2) of the cooling unit (18) under operation conditions of the circuit (16). The cooling liquid of the cooling circuit (16) represents a chemical equilibrium system, wherein at least one primary compound (A, B) reacts in an endothermic reaction by forming at least one other compound (C, D) at the first temperature (T1), which other compound (C, D) reacts in an exothermic reverse reaction by forming the primary compound (A, B) at the second temperature (T2).

The invention further relates to a corresponding method.

Fig.

**Description**

Cooling circuit and method for cooling a heat generating device

The invention relates to a cooling circuit for cooling a heat generating device of a vehicle, the circuit comprising a heat sink means for contacting the heat generating device, a cooling unit and a conduit system for recirculation of a cooling fluid between the heat sink means and the cooling unit, wherein a first temperature of the heat sink means is higher than a second temperature at the cooling unit under operation conditions of the circuit. The invention further relates to a method for cooling a heat generating device, especially a heat generating device of a vehicle, by use of a cooling circuit, which circuit comprises a heat sink means for contacting the heat generating device, a cooling unit and a conduit system for recirculation of a cooling fluid between the heat sink means and the cooling unit, wherein a first temperature of the heat sink means is higher than a second temperature at the cooling unit under operation conditions of the circuit.

Many heat generating devices for vehicles like the power electronics for cars are in need of a cooling system for failure-free operation. This cooling system is for example a cooling circuit made of a heat sink, a cooling device like a radiator, a pump and a conduit system for recirculation of a cooling fluid between the heat sink means and the cooling unit, said conduit system comprising pipes for connecting these components to build the cooling circuit.

One of the cooling fluid used up to now is a mixture of water and glycol, wherein the heat capacity is limited by the water heat capacity. The cooling fluid is heated at the heat sink taking the energy out of heat generating device and is cooling down at the cooling unit releasing energy. The pump circulates this fluid from heat sink to the cooling unit (radiator) and back to the heat sink.

The heat capacity of the cooling fluid and the power to be dissipated determines the amount of cooling fluid volume necessary for cooling the device and implicit determines the size and weight of the cooling system.

It is an object of the invention to provide a cooling circuit and method for cooling a heat generating device with increased heat capacity of the cooling fluid.

This object is achieved by the present invention as defined in claims 1 and 10.

According to the invention the cooling circuit is operated with a cooling liquid which represents a chemical equilibrium system, wherein at least one primary compound reacts in an endothermic reaction by forming at least one other compound at the first temperature T1 , which other compound reacts in an exothermic reverse reaction by forming the primary compound at the second temperature T2. The primary compound or primary compounds is/are dispersed in the cooling fluid at a temperature below a temperature threshold Ts, wherein the temperature threshold Ts is below the first temperature T1 and above the second temperature T2 (T1 > Ts > T2). The at least one primary compound reacts in an endothermic reaction by forming the at least one other compound in the heat sink means at the first temperature, which other compound reacts in an exothermic reverse reaction by forming the primary compound in the cooling unit at the second temperature T2.

When the cooling fluid reaches the heat sink area, which is at a temperature above the threshold Ts, it absorbs energy from the heat generating device. The energy determines the endothermic reaction between the primary compound (s), and the formation of the other compound(s). Thus the energy is absorbed as chemical energy with low temperature increase. The resulting compound(s) react(s) spontaneously (variation of enthalpy is negative) and it/they regenerate the primary compound(s). The corresponding heat is released in the cooling unit, like for example a radiator.

According to a preferred embodiment of the invention, at least two primary compounds react with each other in an endothermic reaction by forming the at least one other compound at the first temperature T1, which at least one other compound reacts in an exothermic reverse reaction by forming the primary compounds at the second temperature T2.

According to another preferred embodiment of the invention, the at least one primary compound reacts endothermic by forming at least two other compounds at the first temperature T1, which other compounds react with each other in an exothermic reverse reaction by forming the at least one primary compound at the second temperature T2.

According to yet another preferred embodiment of the invention, the at least two primary compounds react with each other endothermic by forming at least two other compounds at the first temperature T1, which other compounds react with each other in an exothermic reverse reaction by forming the primary compounds at the second temperature T2. Especially, the primary compounds are $CH_3COO\text{-}CH_2\text{-}CH_2\text{-}OOCCH_3$ (glycol di-acetic ester) and $H_2O$ (water) and the other compounds are $HO\text{-}CH_2\text{-}CH_2\text{-}OH$ (glycol) and $CH_3COOH$ (acetic acid) .

In accordance with a preferred embodiment of the invention, the heat sink means comprises a catalyst for accelerating the endothermic reaction and/or the cooling unit comprises a catalyst for accelerating the exothermic reverse reaction.

In accordance with another preferred embodiment of the invention, the circuit further comprises a pumping unit for recirculation of the cooling fluid between the heat sink means and the cooling unit.

The invention further relates to a coolable device, especially a device of a vehicle, comprising a heat generating device in thermal contact with a heat sink means of an aforementioned cooling circuit. The thermal contact especially is established by heat conductive paste between the heat generating device and the heat sink.

According to a preferred embodiment of the invention, the heat generating device is one of a power electronics device and an electrical energy storage means for a vehicle with an electrical drive or a hybrid drive.

The method according to the invention is characterized in that the cooling liquid represents a chemical equilibrium system, wherein at least one primary compound reacts in an endothermic reaction by forming at least one other compound at the first temperature T1, which other compound reacts in an exothermic reverse reaction by forming the primary compound at the second temperature T2.

Especially at least two primary compounds react with each other in an endothermic reaction by forming the at least one other compound at the first temperature T1, which other compound reacts in an exothermic reverse reaction by forming the primary compounds at the second temperature T2. Preferably, the at least one primary compound reacts endothermic by forming at least two other compounds at the first temperature T1, which other compounds react with each other in an exothermic reverse reaction by forming the primary compound at the second temperature T2.

According to yet another preferred embodiment of the invention, the at least two primary compounds react with each other endothermic by forming at least two other compounds at the first temperature T1, which other compounds react with each other in an exothermic reverse reaction by forming the primary compounds at the second temperature T2. Especially, the primary compounds are $CH_3COO\text{-}CH_2\text{-}CH_2\text{-}OOCCH_3$ (glycol di-acetic ester) and $H_2O$ (water) and the other compounds are $HO\text{-}CH_2\text{-}CH_2\text{-}OH$ (glycol) and $CH_3COOH$ (acetic acid) .

These and other aspects of the invention will be apparent from and elucidated with reference to the embodiment described hereinafter.

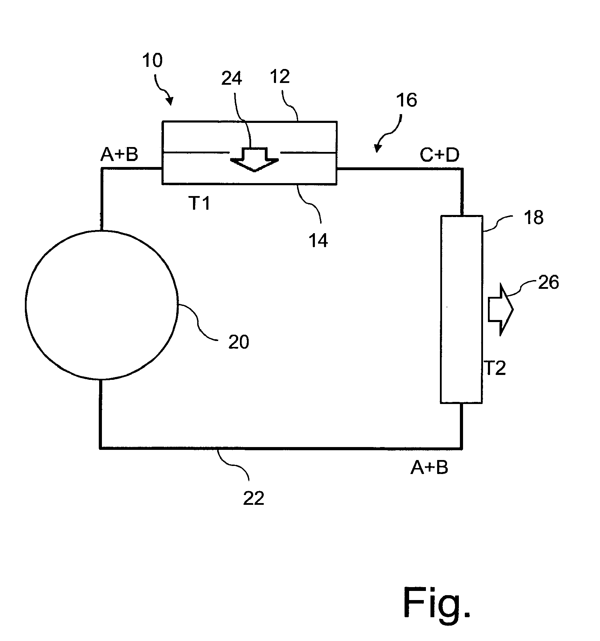

In the drawing the

Figure depicts a schematic representation of a coolable device of a vehicle, the device comprising a heat generating device in thermal contact with a heat sink means of a cooling circuit according to an embodiment of the invention.

The only figure shows a schematic representation of a coolable device 10 of a vehicle (not shown), the device 10 comprising a heat generating device 12 in thermal contact with a heat sink means 14 of a cooling circuit 16. The heat generating device of the Fig. is an electronic device, especially a power electronics device.

The cooling circuit 16 further comprises the following elements: a cooling unit 18, a pumping unit 20 and a conduit system 22 for recirculation of a cooling fluid between the heat sink means 14 and the cooling unit 18. In normal operation mode of the circuit 16 a first temperature T1 of the heat sink means 14 is higher than a second temperature T2 (T1 > T2)at the cooling unit 18. The cooling liquid represents a chemical equilibrium system, wherein two primary compounds A, B of the cooling liquid react with each other endothermic by forming two other compounds C, D at the first temperature T1 within the heat sink means 14, which other compounds C, D react with each other in an exothermic reverse reaction by forming the primary compounds A, B at the second temperature T2 within the cooling unit 18.

The cooling circuit uses Le Chatelier's Principle: If a chemical system at equilibrium experiences a change in concentration, temperature, volume, or partial pressure, then the equilibrium shifts to counteract the imposed change.

The heat capacity of the coolant is increased by dispersing the two first compounds in the cooling fluid, which primary compounds can react endothermic with absorption of energy (arrow 24) at a Temperature above a temperature threshold Ts of the equilibrium system. The compounds A, B are reactants forming other compounds C and D when the cooling fluid reaches the heat sink means area, which area is hotter than the temperature threshold Ts. Because the reaction is an endothermic reaction, energy is absorbed during this reaction of the primary compounds A, B.

The energy determines the endothermic reaction between A and B, and formation of the other compounds C and D. Thus the energy is absorbed as chemical energy, with low temperature increase.

$$A + B + energy \rightarrow C + D \qquad\qquad (1)$$

with $\Delta H > O$ (enthalpy is positive, the reaction occurs with absorption of energy). The resulting other compounds C, D react spontaneously (variation of enthalpy is negative) and they regenerate A, B. The corresponding heat (arrow 26) is released in the cooling unit (radiator), according to the equation

$$C + D \rightarrow A + B + energy \qquad\qquad (2)$$

with $\Delta H < O$ (enthalpy is negative).

According to this embodiment, the primary compounds are A: $CH_3COO\text{-}CH_2\text{-}CH_2\text{-}OOCCH_3$ (glycol di-acetic

ester) and B: $H_2O$ (water) and the other compounds are C: $HO-CH_2-CH_2-OH$ (glycol) and D: $CH_3COOH$ (acetic acid). Equation (1) now reads

$$CH_3COO-CH_2-CH_2-OOCCH_3 + 2\ H_2O + energy \rightarrow HO-CH_2-CH_2-OH + 2\ CH_3COOH$$

with 1 $\Delta H$ = 112.8 KJ/mol, wherein each mol of reactant absorbs 112.8 kJ. Equation (2) now reads

$$HO-CH_2-CH_2-OH + 2\ CH_3COOH \rightarrow CH_3COO-CH_2-CH_2-OOCCH_3 + 2\ H_2O + energy$$

with $\Delta H$ = -112.8 KJ/mol.

That means more heat is absorbed per coolant kilogram, less volume for cooling fluid is necessary, so that the cooling circuit 16 can be more compact and much lighter.

For example in the aforementioned reaction 1 kg of primary compounds $CH_3COO-CH_2-CH_2-OOCCH_3 + 2\ H_2O$ will store the same energy amount as 148 kg of pure $H_2O$ (water):

1 mol glycol 2 mols acetic acid = 1 *62.0689 + 2 * 609 = 182g of reactants for a mol

182g of reactant absorb 112.8 kJ (enthalpy of reaction for 1 mol) $\rightarrow$ 1 kg absorbs 619.78 kJ with no increase in temperature.

The same heat contained in water will require almost 148 kg with 1 celsius degree increase in temperature with:

Mass $H_2O$ Q / heatcapacity $H_2O/\Delta T$ = 619.78kJ/(4.187kJ/kgK)/1K = 148.026 kg.

## Claims

1.  Cooling circuit (16) for cooling a heat generating device (12) of a vehicle, the circuit (16) comprising:

    - a heat sink means (14) for contacting the heat generating device (12);
    - a cooling unit (18); and
    - a conduit system (22) for recirculation of a cooling fluid between the heat sink means (14) and the cooling unit (18),
    wherein a first temperature (T1) of the heat sink means (14) is higher than a second temperature (T2) of the cooling unit (18) under operation conditions of the circuit (16), **characterized in that** the cooling liquid represents a chemical equilibrium system, wherein at least one primary compound (A, B) reacts in an endothermic reaction by forming at least one other compound (C, D) at the first temperature (T1), which other compound (C, D) reacts in an exothermic reverse reaction by forming the primary compound (A, B) at the second temperature (T2).

2.  Cooling circuit according to claim 1, wherein at least two primary compounds (A, B) react with each other in an endothermic reaction by forming the at least one other compound (C, D) at the first temperature (T1), which other compound (C, D) reacts in an exothermic reverse reaction by forming the primary compounds (A, B) at the second temperature (T2).

3.  Cooling circuit according to claim 1 or 2, wherein the at least one primary compound (A, B) reacts endothermic by forming at least two other compounds (C, D) at the first temperature (T1), which other compounds (C, D) react with each other in an exothermic reverse reaction by forming the primary compound (A, B) at the second temperature (T2).

4.  Cooling circuit according to one of claims 1 to 3, wherein the at least two primary compounds (A, B) react with each other endothermic by forming at least two other compounds (C, D) at the first temperature (T1), which other compounds react with each other in an exothermic reverse reaction by forming the primary compounds at the second temperature (T2) .

5.  Cooling circuit according to claim 4, wherein the primary compounds are $CH_3COO-CH_2-CH_2-OOCCH_3$ and water and the other compounds are glycol and acetic acid.

6.  Cooling circuit according to one of claims 1 to 5, wherein the heat sink means (14) comprises a catalyst for accelerating the endothermic reaction and/or the cooling unit comprises a catalyst for accelerating the exothermic reverse reaction.

7. Cooling circuit according to one of claims 1 to 6, wherein the circuit (16) further comprises a pumping unit (20) for recirculation of the cooling fluid between the heat sink means (14) and the cooling unit (18).

8. Coolable device, especially of a vehicle, comprising a heat generating device (12) in thermal contact with a heat sink means (14) of a cooling circuit (16) according to one of claims 1 to 7.

9. Coolable device according to claim 8, wherein the heat generating device (12) is one of a power electronics device and an electrical energy storage means for a vehicle with an electrical drive or a hybrid drive.

10. Method for cooling a heat generating device, especially a device of a vehicle, by use of a cooling circuit, which circuit comprises a heat sink means for contacting the heat generating device, a cooling unit and a conduit system for recirculation of a cooling fluid between the heat sink means and the cooling unit, wherein a first temperature (T1) of the heat sink means is higher than a second temperature (T2) of the cooling unit under operation conditions of the circuit, **characterized in that**
the cooling liquid represents a chemical equilibrium system, wherein at least one primary compound (A, B) reacts in an endothermic reaction by forming at least one other compound (C, D) at the first temperature (T1), which other compound (C, D) reacts in an exothermic reverse reaction by forming the primary compound (A, B) at the second temperature (T2).

10
24    12
16

A+B                                C+D

T1

14

18

26

20

T2

22

A+B

Fig.

Europäisches
Patentamt

European
Patent Office

Office européen
des brevets

## EUROPEAN SEARCH REPORT

Application Number

EP 10 46 4002

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 951 741 A (SCHUURMAN EIKO A [NL]) 28 August 1990 (1990-08-28) * column 1, lines 5-14 * * column 3, line 44 - column 4, line 25 * * column 4, line 63 - column 6, line 5; claims; figure 6 * | 1-4,6-10 | INV. C09K5/16 F01P9/00 |
| X | WO 99/42538 A1 (HYSORB TECHNOLOGY INC [US]; FELDMAN K THOMAS JR [US]; JENSEN CRAIG M []) 26 August 1999 (1999-08-26) * page 2, line 30 - page 3, line 27 * * page 4, line 7 - page 5, line 18 * * page 10, line 23 - page 14, line 22; figure 3 * | 1-4,7-10 | |
| X | DE 196 53 699 A1 (SIGRIST KLAUS DIETER DR RER NA [DE]) 18 June 1998 (1998-06-18) * the whole document * | 1-4,6-10 | |
| X | JP 62 112678 A (RYOMEI ENG CORP LTD) 23 May 1987 (1987-05-23) * abstract * | 1-4,6-10 | TECHNICAL FIELDS SEARCHED (IPC) C09K F01P |
| A | US 3 606 015 A (BUKACEK RICHARD FRANCIS ET AL) 20 September 1971 (1971-09-20) * column 7, lines 5-39 * | 1-4 | |

The present search report has been drawn up for all claims

| Place of search | Date of completion of the search | Examiner |
|---|---|---|
| The Hague | 10 June 2010 | Martinez Marcos, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 46 4002

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2010

| Patent document cited in search report | | Publication date | Patent family member(s) | | Publication date |
|---|---|---|---|---|---|
| US 4951741 | A | 28-08-1990 | AT | 119657 T | 15-03-1995 |
| | | | AU | 647426 B2 | 24-03-1994 |
| | | | CA | 2068737 A1 | 16-05-1991 |
| | | | DE | 69017708 D1 | 13-04-1995 |
| | | | DE | 69017708 T2 | 29-06-1995 |
| | | | DK | 0500719 T3 | 22-05-1995 |
| | | | EP | 0500719 A1 | 02-09-1992 |
| | | | ES | 2071835 T3 | 01-07-1995 |
| | | | JP | 5503569 T | 10-06-1993 |
| | | | WO | 9107628 A1 | 30-05-1991 |
| | | | NL | 9001878 A | 03-06-1991 |
| WO 9942538 | A1 | 26-08-1999 | AU | 1460399 A | 06-09-1999 |
| | | | CN | 1291221 A | 11-04-2001 |
| | | | EP | 1060222 A1 | 20-12-2000 |
| | | | JP | 2003517490 T | 27-05-2003 |
| DE 19653699 | A1 | 18-06-1998 | NONE | | |
| JP 62112678 | A | 23-05-1987 | NONE | | |
| US 3606015 | A | 20-09-1971 | NONE | | |

For more details about this annex : see Official Journal of the European Patent Office, No. 12/82